# EUROPEAN PATENT SPECIFICATION

(11) **EP 2 487 138 B1**
(45) Date of publication and mention of the grant of the patent: **25.05.2016**
(21) Application number: 10821739.9
(22) Date of filing: 05.10.2010
(51) Int. Cl.: C02F 1/469, B01D 61/48, B01J 49/00, C02F 1/42, C02F 5/00, F24H 1/18, F24D 19/00, C02F 103/02, C02F 1/461, C02F 1/46, B01D 61/54, B01D 61/46, B01D 57/02

(54) **WATER TREATMENT DEVICE AND WATER HEATER**
WASSERBEARBEITUNGSVORRICHTUNG UND WASSERERHITZER
DISPOSITIF DE TRAITEMENT DE L'EAU ET CHAUFFE-EAU

(30) Priority: 09.10.2009 JP 2009234781
(43) Date of publication of application: 15.08.2012
(73) Proprietor: Panasonic Corporation, Kadoma-shi Osaka 571-8501 (JP)
(72) Inventor: SASABE, Shigeru, Osaka 540-6207 (JP); OKETA, Takemi, Osaka 540-6207 (JP); UNO, Katsuhiko, Osaka 540-6207 (JP); HORIKI, Taisuke, Osaka 540-6207 (JP)
(74) Representative: Eisenführ Speiser
(86) International application number: PCT/JP2010/005959
(87) International publication number: WO 2011/043062

(56) References cited:
- EP-A1- 0 459 642
- WO-A1-2007/044609
- JP-A- 8 117 745
- JP-A- H0 768 256
- JP-A- 2001 179 250
- JP-A- 2001 509 074
- US-A1- 2005 029 124
- US-A1- 2006 231 495

## Description

### [Technical Field]

In a water heater such as an electric calorifier and a heat pump water heater, the present invention relates a technique for providing a user with softened water in a maintenance-free manner or for preventing scale from being produced in a pipe of the water heater.

### [Background Technique]

As a conventional technique for preventing scale from being produced in a pipe of a water heater, there is a technique for regenerating an ion-exchanging resin in a maintenance-free manner without water softening treatment or without using a medicine by means of the ion-exchanging resin (see patent document 1 for example).

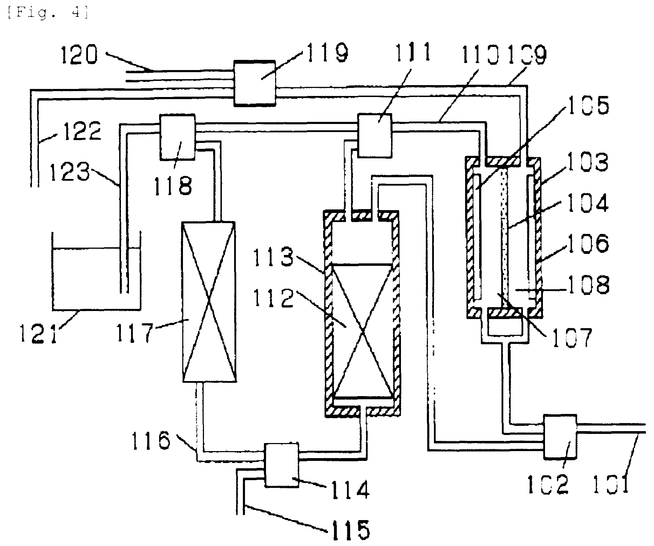

Fig. 4 is a block diagram of such a conventional water heater which prevents scale from being produced in a pipe. A raw water supply pipe 101 which is a water passage through which water is supplied to a bathing water heater is connected to a lower portion of an electrolysis apparatus 103 and an upper portion of the water softening apparatus 113 through a three-way valve 102. The three-way valve 102 switches the raw water supply pipe 101 so that water is supplied to the water softening apparatus 113 when water is to be obtained and water is supplied to the electrolysis apparatus 103 when a regenerating treatment is to be performed. The electrolysis apparatus 103 is partitioned into an anode chamber 107 and a cathode chamber 108 by a porous diaphragm 104, e.g., an unglazed diaphragm, and electrodes 105 and 106 are disposed in the anode chamber 107 and the cathode chamber 108, respectively.

An acid-water outlet pipe 110 is connected to an upper portion of the anode chamber 107 through a three-way valve 111. The acid-water outlet pipe 110 is further connected to a water supply pipe 123 leading to the bathtub 121 through the three-way valve 118 and the upper portion of the water softening apparatus 113 into which a positive ion-exchanging resin 112 is charged. The three-way valves 111 and 118 are switched so that water is supplied to the water softening apparatus 113 when the ion-exchanging resin is regenerated, and water is supplied to the water supply pipe 123 leading to the bathtub 121 when taking an acid bath.

An alkaline water outlet pipe 109 is connected to an upper portion of the cathode chamber 108, and the alkaline water outlet pipe 109 is also connected to the drain pipe 122 and the drinking water pipe 120 through a three-way valve 119. The three-way valve 119 is switched so that water is supplied to the drinking water pipe 120 when drinking alkaline water, and water is discharged from a drain pipe 122 except when drinking water. A bathing water heater 117 is connected to a lower portion of the water softening apparatus 113 through a three-way valve 114, a drain pipe 115 and a pipe 116.

In the above configuration, water passes through the raw water supply pipe 101. When water is obtained, the three-way valve 102 is switched, and water is supplied from an upper portion of the water softening apparatus 113 into which the positive ion-exchanging resin 112 is charged. Positive ion such as calcium and magnesium in water is replaced by hydrogen ion by a positive ion-exchanging resin 112, and soft water is supplied from a pipe 123 to the bathtub 121 through the pipe 116 and the bathing water heater 117.

The positive ion-exchanging resin is to be regenerated, the three-way valve 102 switched, and water is supplied to the electrolysis apparatus 103. The anode chamber 107 and the cathode chamber 108 are formed in the electrolysis apparatus 103 by the diaphragm 104 such that these chambers are separated from each other, and the electrodes 105 and 106 are disposed in the anode chamber 107 and the cathode chamber 108, respectively. DC voltage is applied between the electrodes 105 and 106, and the three-way valve 111 is switched so that acid water obtained by the anode chamber 107 is supplied from the upper portion of the water softening apparatus 113. At that time, the three-way valve 114 is switched toward the drain pipe 115 so that water is not supplied to the bathing water heater 117.

When taking acid bath, the three-way valves 111 and 118 are switched and acid water obtained by the anode chamber 107 is supplied to the bathtub 121 through the pipes 110 and 123. At that time, since the three-way valve 118 is switched, acid water is not supplied to the bathing water heater 117.

When drinking alkaline water in a bathroom, the three-way valve 119 is switched.

As described above, it is possible to remove hardness component such as calcium and magnesium in water by the positive ion-exchanging resin, and to prevent scale from adhering to the bathing water heater pipe and the bathtub. According to this, it is possible to reduce frequency of a cleaning treatment of the bathtub.

Since the positive ion-exchanging resin is regenerated by acid water obtained by the electrolysis of water, it is unnecessary to supply salt and soft water can continuously be supplied. If acid water is supplied to the bathtub, it is possible to enjoy acid bath, and to drink alkaline water in a bathroom.

As a technique for softening water, there is a technique using a water-splitting ion-exchange film (see patent document 2).

According to this technique, a water-splitting ion-exchange film including two layers, i.e., a positive ion-exchange layer and a negative ion-exchange layer is sandwiched between a pair of electrodes. If the electrodes are energized, a hardness component adheres to a surface of the water-splitting ion-exchange film, and water is softened. If a polarity is reversed and voltage is applied, water is dissociated at an interface between the positive ion-exchange layer and the negative ion-exchange layer, and the water-splitting ion-exchange film can be regenerated by the hydrogen ion and hydroxide ion produced by the dissociation.

### [Prior Art Documents]

### [Patent Documents]

[Patent Document 1] Japanese Patent Application Laid-open No.H7-68256
[Patent Document 2] Japanese Patent Publication No.4044148
[Patent Document 3] US Patent Application 2006/0231495A
[Patent Document 4] EP Patent Application 0 459 642A
[Patent Document 5] PCT Patent Application WO 2007/044609A

### [Summary of the Invention]

### [Problem to be Solved by the Invention]

According to the conventional configuration shown in patent document 1, however, there is a problem that the electrolysis apparatus 103 and the water softening apparatus 113 are individually provided, the apparatus becomes complicated and a large installation space is required.

According to the technique using the water-splitting ion-exchange film shown in patent document 2, a hardness component adheres to a surface of the water-splitting ion-exchange film, ion exchange is conducted, and the hardness component is removed. When the resin is to be regenerated, voltage is applied to the electrode, water is dissociated at the interface of the water-splitting ion-exchange film in which the hardness component is ion-exchanged, the hydrogen ion and the hydroxide ion are produced and the resin is regenerated. Therefore, since the water softening treatment and the regenerating treatment can be performed in one apparatus, the apparatus is simple in configuration, a space can be saved, it is possible to perform the water softening treatment and the regenerating treatment, and this is an effective water softening technique that can be applied to water heaters.

However, when the technique using the water-splitting film is applied to the water heater, it is necessary to softening a large quantity of, e.g., a few hundred liters of raw water continuously and to boil the water in the hot water tank. Hence, according to a water-splitting ion-exchange film having a small ion-exchanging capacity per unit volume, since the large quantity of raw water is subjected to the water softening treatment, there is a problem that the water softening apparatus is increased in size, and it is difficult accommodate the water softening apparatus in a water heater apparatus.

Patent document 2 proposes a method in which a plurality of water softening apparatuses are installed, regenerating treatments of the water softening apparatuses are alternately performed, and the water softening treatments are performed in the plurality of water softening apparatuses. According to this method, however, since a flow rate of water to be treated is reduced while one water softening apparatus is regenerating, if the water softening apparatus is provided in a water heater, there are problem that a flow rate of hot water supplied to a user becomes unstable, hardness of the treated soft water becomes unstable, and a boiling temperature becomes unstable.

Patent Document 3 relates to methods, systems, and devices for electrically purifying liquids containing species such as minerals, salts, ions, organics and the like. In a method for regenerating media within an electrical purification device, the media is exposed to one or more eluting solutions, and/or selectively desorbing ions, organics, and/or other species from the media by exposing the media to certain eluting conditions. Furthermore, a method of treating a solution containing ions, organics, and/or other species is provided wherein an electrical purification apparatus is used in a continuous or semi-continuous fashion, it is also performed a regeneration of media contained within the apparatus.

An apparatus for treating a liquid by electrochemical ion exchange According to Patent Document 4 comprises a flow channel in which are arranged a cation-responsive ion exchange electrode side by side with an anion-responsive ion exchange electrode, with a counter electrode between them. By controlling the currents to the two ion exchanger electrodes independently, the pH of the treated liquid can be controlled at a desired value.

In Patent Document 5, a fluid treatment apparatus for treating a fluid is disclosed wherein first and second electrodes are positioned about a membrane. The apparatus also comprises a controller to control and operate a power supply and valve system. The power supply supplies a current to the first and second electrodes at sufficiently high current density to result in bacteriostasis deactivation, or a reduction in the microorganisms in the fluid. The controller can also operate a set of cells to deionize fluid and regenerate the cells.

Hence, it is an object of the present invention to provide a compact water treatment device having a simple configuration and capable of continuously treating a large quantity of water into soft water having stable hardness, and to provide and a compact water heater having the water treatment device.

### [Means for Solving the Problems]

To solve the conventional problems, the present invention provides a water treatment device in accordance with claim 1 and a water heater in accordance with claim 9. According to this, in accordance with the ion-exchanging capacity of the water-splitting ion-exchanger, if a treatment flow rate of water that can be treated by one of the water softening means groups reaches a limit, the other water softening means group performs the water softening treatment, and the water softening means alternately performs the water softening treatment. Therefore, even if the water-splitting ion-exchanges has a small ion-exchanging capacity, it is possible to continuously softening a large quantity of water.

### [Effect of the Invention]

According to the present invention, it is possible to provide a compact water treatment device having a simple configuration and capable of continuously treating a large quantity of water into soft water having stable hardness, and to provide and a compact water heater having the water treatment device.

### [Brief Description of the Drawings]

Fig. 1 is a block diagram of a water heater according to a first embodiment of the present invention;
Fig. 2 is a sectional view of water softening means when the water softening treatment is performed;
Fig. 3 is a sectional view of the water softening means when a regenerating treatment is performed; and
Fig. 4 is a block diagram of a conventional water heater.

### [Explanation of Symbols]

- 4: water pipe
- 5: first water softening means
- 6: second water softening means
- 8: first flow passage switching valve
- 9: second flow passage switching valve
- 10: drain pipe
- 11: flowmeter
- 15: water heating means
- 19: casing
- 20: electrode
- 21: water-splitting ion-exchanger
- 22: positive ion-exchanger
- 23: negative ion-exchanger
- 24: flow path

### [Mode for Carrying Out the Invention]

A first aspect of the present invention provides a water treatment device comprising first water softening means and second water softening means, characterized in that each of the first water softening means and the second water softening means includes a casing, a pair of electrodes, a water-splitting ion-exchange having a positive ion exchanger and a negative ion-exchanger, and a flow path which is in contact with a surface of the water-splitting ion-exchange are provided in the casing, the water treatment device further comprises control means, the control means controls such that after the first water softening means is made to perform a water softening treatment of a predetermined flow rate, the water softening treatment of the first water softening means is stopped, the second water softening means is made to perform the water softening treatment, and after the second water softening means is made to perform the water softening treatment of a predetermined flow rate, the water softening treatment of the second water softening means is stopped, the first water softening means is again made to perform the water softening treatment, and this processing is repeated, thereby making the first water softening means and the second water softening means alternately perform the water softening treatment. According to this, in accordance with the ion-exchanging capacity of the water-splitting ion-exchanger, if a treatment flow rate of water that can be treated by one of the water softening means groups reaches a limit, the other water softening means group performs the water softening treatment, and the water softening means alternately performs the water softening treatment. Therefore, even if the water-splitting ion-exchanges has a small ion-exchanging capacity, it is possible to continuously softening a large quantity of water.

When the water softening treatment is performed, if the same number of water softening means groups always performs the water softening treatment, a flow rate of water to be treated is constant and is stable. Therefore, water can be treated into soft water having stable hardness, and it is possible to supply hot water with a constant and stable flow rate to a user. A boiling temperature at the water heating means can be maintained at a constant temperature.

Since the water softening treatment and the regenerating treatment can be performed in one apparatus, the apparatus is simple in configuration and a space can be saved.

According to a second aspect of the invention, especially in the first aspect, the water treatment device further comprises a first water softening means group including the first water softening means and at least one more first water softening means, and a second water softening means group including the second water softening means and at least one more second water softening means, characterized in that while the first water softening means group performs the water softening treatment, the control means makes the second water softening means group perform a regenerating treatment, and while the second water softening means group performs the water softening treatment, the control means makes the first water softening means group perform the regenerating treatment. According to this, next water softening treatment can be performed in a state where first or second water softening means is always regenerated. Therefore, even when the first and second water softening means groups are alternately switched and operated, soft water having stable hardness can continuously be supplied.

According to a third aspect of the invention, especially in the second aspect, the first water softening means group and the second water softening means group are disposed in parallel, a first flow passage switching valve is provided downstream of the first water softening means group, a second flow passage switching valve is provided downstream of the second water softening means group, and the control means switches the first flow passage switching valve, and switches the second flow passage switching valve, thereby making the first water softening means group perform the water softening treatment and making the second water softening means group perform the water softening treatment. According to this, alternate operations of the water softening treatment can be performed by the first and second water softening means.

When one of the water softening means is performing the water softening treatment, the other water softening means closes the flow passage switching valve, and the other water softening means is regenerated. According to this, the water treatment device can be ready for a next water softening treatment.

According to a fourth aspect of the invention, especially in the third aspect, the first flow passage switching valve and the second flow passage switching valve are three-way valves, one of outflow ports of each of the three-way valves is provided with a water pipe, and the other flow port of the three-way valve is provided with a drain pipe. According to this, water softening treatments of the first and second water softening means can be switched by the three-way valve, water passages are switched and concentrated water at the time of the regenerating treatment can be discharged to the drain pipe, and it is possible to easily switch the water passages for drainage when the water softening treatment and the regenerating treatment are performed with a small number of constituent parts.

According to a fifth aspect of the invention, especially in the third aspect, a path of a water pipe is provided with a flowmeter, and the control means switches the first flow passage switching valve and switches the second flow passage switching valve by a signal from the flowmeter. According to this, when the water softening means softens a treatment flow rate of water which is set based on an ion-exchanging capacity of the water-splitting ion-exchanges, the first and second water softening means can be switched and the water softening treatment can be performed. Therefore, it is possible to always supply soft water having appropriate hardness.

According to a sixth aspect of the invention, especially in the third aspect, the water treatment device further comprises a timer, characterized in that the control means switches the first flow passage switching valve and switches the second flow passage switching valve by a signal from the timer. According to this, treatment time during which one of the water softening means can treat is set from the flow rate and the ion-exchanging capacity of the water-splitting ion-exchanger, and when the water softening means performs the water softening treatment during the set treatment time, the first and second water softening means are switched, and the water softening treatment can be performed. Therefore, it is possible to always supply soft water having appropriate hardness.

According to a seventh aspect of the invention, especially in the third aspect, conductivity meters are disposed downstream of the first water softening means group and downstream of the second water softening means group, respectively, and the control means switches the first flow passage switching valve and switches the second flow passage switching valve by signals from the respective conductivity meters. According to this, the first and second water softening means can be switched in accordance with conductivity having high interrelationship with hardness and the water softening treatment can be performed. Therefore, it is possible to supply soft water having further stable hardness.

According to an eighth aspect of the invention, especially in the first aspect, in each of the first water softening means and the second water softening means, an upper portion of the casing is provided with an outlet through which softened water and concentrated water produced by the regenerating treatment flow out. According to this, gas generated when the regenerating treatment is performed can be discharged outside without accumulating in the water softening means. Therefore, it is possible to prevent gas from accumulating in the hot water tank of the water heater.

A ninth aspect of the present invention provides a water heater provided with the water treatment device according to any one of the first to eighth aspects. According to this, it is possible to realize a water heater which performs water softening treatment in a maintenance-free manner.

### [Embodiment]

An embodiment of the present invention will be described with reference to the drawings below. The invention is not limited to the embodiment.

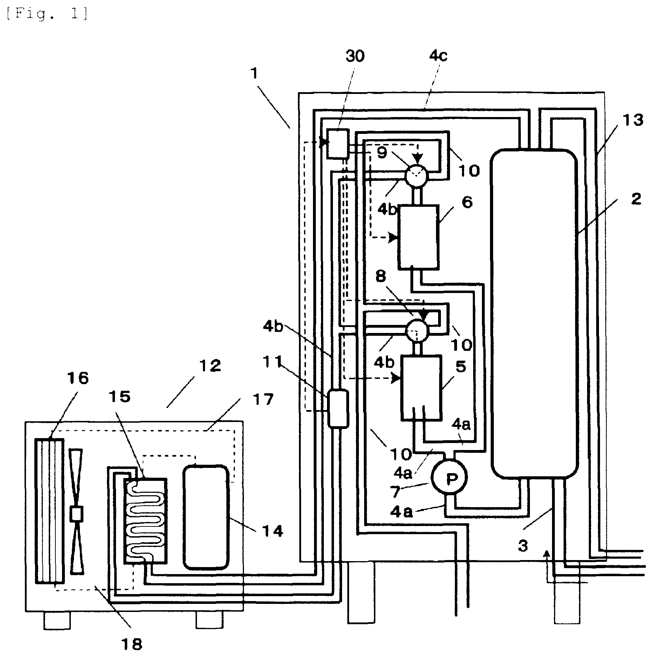

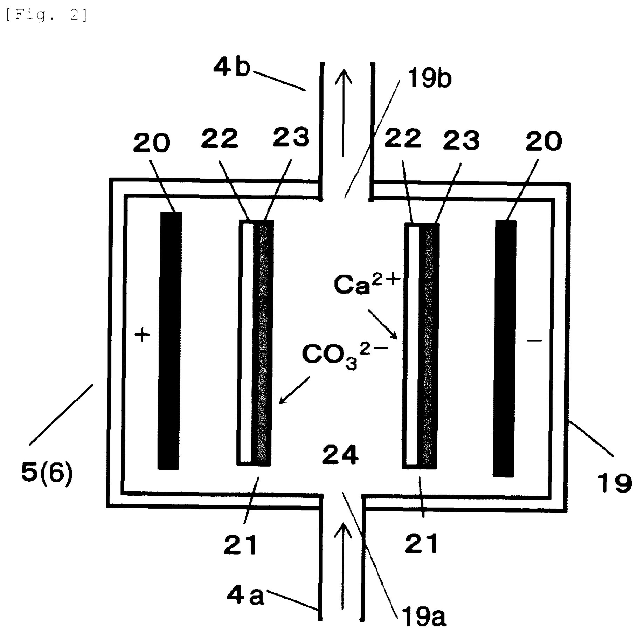

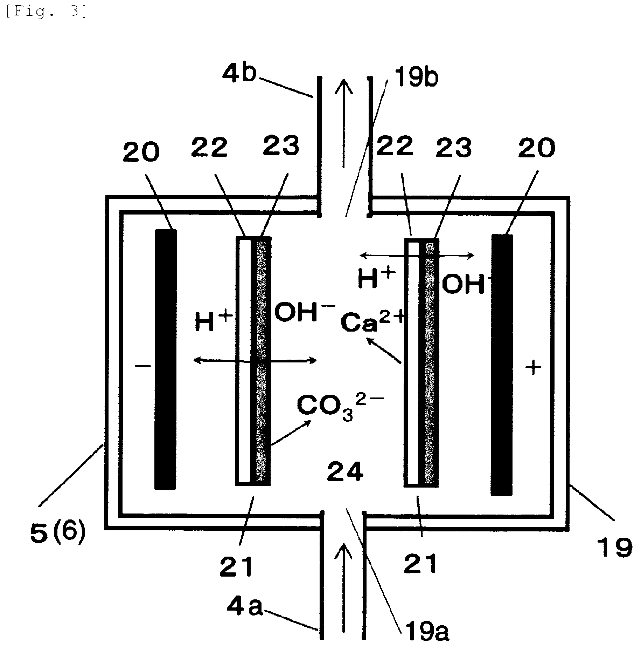

Fig. 1 is a block diagram of a water heater provided with a water treatment device according to the embodiment of the invention. Fig. 2 is a conceptual diagram showing a water softening treatment of water softening means used for the water treatment device. Fig. 3 is a conceptual diagram showing a regenerating treatment of the water softening means.

As shown in Fig. 1, a hot water tank 2 in which raw water and boiled water are stored is disposed in a hot-water reserving unit 1. A raw water pipe 3 through which raw water from service water is supplied into the hot water tank 2 is connected to a lower portion of the hot water tank 2.

A water pipe 4a is connected to a lower portion of the hot water tank 2. The water pipe 4a is connected to first water softening means 5 and second water softening means 6. The water pipe 4a is provided with a pump 7. Water in the hot water tank 2 is supplied to the first water softening means 5 and the second water softening means 6 by the pump 7. The water pipe 4a branches off upstream of the first water softening means 5 and the second water softening means 6. The first water softening means 5 and the second water softening means 6 are disposed in parallel.

A first flow passage switching valve (first three-way valve) 8 which switches between a water pipe 4b and a drain pipe 10 is provided downstream of the first water softening means 5, and a second flow passage switching valve (second three-way valve) 9 which switches between the water pipe 4b and the drain pipe 10 is provided downstream of the second water softening means 6.

Here, concentrated water produced at the time of the regenerating treatment of the first water softening means 5 and the second water softening means 6 is discharged through the drain pipe 10. A switching operation of the first flow passage switching valve 8 and a switching operation of the second flow passage switching valve 9 are performed by control means 30. When the first water softening means 5 is performing the water softening treatment, the first flow passage switching valve 8 flows soft water to the water pipe 4b, and when the first water softening means 5 is performing the regenerating treatment, the first flow passage switching valve 8 flows drainage to the drain pipe 10. When the second water softening means 6 is performing the water softening treatment, the second flow passage switching valve 9 flows soft water to the water pipe 4b, and when the second water softening means 6 is performing the regenerating treatment, the second flow passage switching valve 9 flows drainage to the drain pipe 10.

The water pipe 4b is provided with a flowmeter 11. A flow rate of soft water which is subjected to the water softening treatment by the first water softening means 5 and the second water softening means 6 is measured by the flowmeter 11. The soft water is boiled by the heat pump unit 12 and is supplied to an upper portion of the hot water tank 2 through a water pipe 4c. The water pipe 4c is connected to the upper portion of the hot water tank 2.

A hot-water supply pipe 13 is connected to the upper portion of the hot water tank 2, and hot water existing in the upper portion of the hot water tank 2 is supplied to a bathtub or the like by the hot-water supply pipe 13.

A compressor 14, a water heat exchanger which is water heating means 15, and an air heat exchanger 16 which absorbs heat of outside air are provided in the heat pump unit 12. The compressor 14, the water heating means 15 and the air heat exchanger 16 are connected to one another through a refrigerant pipe 17, and they configure a heat pump cycle 18 using a refrigerant such as CO₂.

By a signal from the flowmeter 11, the control means 30 switches the first flow passage switching valve 8, switches the second flow passage switching valve 9, changes between positive and negative of voltage applied to the first water softening means 5, and changes between positive and negative of voltage applied to the second water softening means 6.

That is, if the control means 30 detects, by a signal from the flowmeter 11, that the first water softening means 5 performs the water softening treatment of a predetermined flow rate, the control means 30 stops the water softening treatment performed by the first water softening means 5, and the control means 30 makes the second water softening means 6 perform the water softening treatment. If the control means 30 detects, by a signal from the flowmeter 11, that the second water softening means 6 performs the water softening treatment of a predetermined flow rate, the control means 30 stops the water softening treatment performed by the second water softening means 6, and the control means 30 makes the first water softening means 5 again perform the water softening treatment. The control means 30 repeats this processing, thereby making the first water softening means 5 and the second water softening means 6 alternately perform the water softening treatment.

While the first water softening means 5 performs the water softening treatment, the control means 30 makes the second water softening means 6 perform the regenerating treatment, and while the second water softening means 6 performs the water softening treatment, the control means 30 makes the first water softening means 5 perform the regenerating treatment.

The water softening means will be described using Fig. 2.

Each of the first water softening means 5 and the second water softening means 6 includes a casing 19, and a pair of electrodes 20 are provided in the casing 19 on both sides. Each of the electrodes 20 is made of platinum-plated titanium, thereby securing resistance to exhaustion. A pair of water-splitting ion-exchangers 21 is provided between the electrodes 20 such that the water-splitting ion-exchangers 21 sandwich a flow path 24.

Each of the water-splitting ion-exchangers 21 is of a two-layer configuration in which a positive ion exchanger 22 having a strong acid ion-exchange group and a negative ion-exchanger 23 having a strong basic ion-exchange group are pasted on each other. The positive ion exchanger 22 configuring one of the water-splitting ion-exchangers 21 and the negative ion-exchanger 23 configuring the other water-splitting ion-exchanger 21 are opposed to each other such that they sandwich the flow path 24. Therefore, the flow path 24 is configured such that water is in contact with the positive ion exchanger 22 of the one of the water-splitting ion-exchangers 21 and the negative ion-exchanger 23 of the other water-splitting ion-exchanger 21. Here, the positive ion exchanger 22 includes a strong acid ion-exchange group having -SO₃H as a functional group, and the negative ion-exchanger 23 includes a strong basic ion-exchange group having -NR₃OH as a functional group.

The casing 19 is provided with an inlet 19a and an outlet 19b, and the flow path 24 is formed from the inlet 19a to the outlet 19b. Raw water flows into the inlet 19a. The inlet 19a is provided at a lower portion in the casing 19 and the water pipe 4a is connected to the inlet 19a. Softened water or concentrated water produced at the time of regeneration flows out from the outlet 19b. The outlet 19b is provided at an upper portion in the casing 19 and the water pipe 4b is connected to the outlet 19b.

The water heater is configured as described above. An operation of the water heater will be described below.

In Fig. 1, raw water is supplied to the hot water tank 2 of the hot-water reserving unit 1 through the raw water pipe 3. Calcium and magnesium of hardness components are included in the raw water, and the raw water has hardness of 100 ppm or higher in a region where ground water is utilized as a water source or in a hot spring resort, and this causes scale in a pipe of heating means of the water heater.

Normally, a heat pump water heater boils water during a late-night time period when electric bill is inexpensive. When late-night electricity time starts, raw water having high hardness in the hot water tank 2 is sent to the first water softening means 5 through the water pipe 4 by the pump 7, and the water softening treatment is performed.

Raw water introduced from a lower portion of the casing 19 upwardly flows from a lower portion of the flow path 24 in a state where calcium carbonate of hardness component is ionized. At that time, DC voltage is applied to the electrodes 20 disposed in the casing 19, and positive voltage is applied to the electrode 20 located on the side of the positive ion exchanger 22 and its polarity becomes positive, and polarity of the electrode 20 located on the side of the negative ion-exchanger 23 becomes negative. As a result, calcium ion (Ca²⁺) in raw water electrophoreses and enters the positive ion exchanger 22 which configures one of the water-splitting ion-exchangers 21, and carbonate ion (CO₃²) electrophoreses and enters the negative ion-exchanger 23 which configures the other water-splitting ion-exchanger 21.

The calcium ion ion-exchanges with hydrogen ion of -SO₃H of strong acid ion-exchange group of the positive ion exchanger 22, and carbonate ion ion-exchanges with hydroxide ion of -NR₃OH of strong basic ion-exchange group of the negative ion-exchanger 23. Hardness component in the flow path 24 is removed and water is softened. The softened water flows out as treated water through the water pipe 4b which is connected to the upper portion of the casing 19.

At that time, the first flow passage switching valve 8 switches the water passage to the water pipe 4b. Therefore, water which is subjected to the water softening treatment flows into the water heat exchanger 15 of the heat pump unit 12 through the water pipe 4b.

In the heat pump cycle 18, a refrigerant in the air heat exchanger 16 is evaporated by the operation of the compressor 14, and this absorbs heat of outside air. The refrigerant which absorbs heat of outside air through the refrigerant pipe 17 is compressed to high pressure, and the refrigerant dissipates heat by the water heat exchanger 15. By this heat, water in the water heat exchanger 15 is heated and boiled.

Since hardness component is removed from water which is heated, it is possible to prevent scale such as calcium carbonate and magnesium sulfate from adhering to the inner surface of the water heat exchanger 15. Hot water boiled by the water heat exchanger 15 is introduced form the upper portion of the hot water tank 2. While the first water softening means 5 performs the water softening treatment, the second water softening means 6 performs the regenerating treatment.

When the second water softening means 6 performs the regenerating treatment, the second flow passage switching valve 9 is set at its closing position so that water does not flow toward the water pipe 4 or the drain pipe 10 from the outlet of the second water softening means 6. A given amount of water is introduced from the lower portion of the hot water tank 2 from a lower portion of the second water softening means 6 through the water pipe 4 by the pump 7.

In the second water softening means 6, if a given amount of raw water flows into the flow path 24 from a lower portion of the casing 19, voltage in a direction opposite from that when water is softened is applied to the electrode 20.

Polarity of the electrode 20 on the side of the negative ion-exchanger 23 becomes positive, and polarity of the electrode 20 on the side of the positive ion exchanger 22 becomes negative. If voltage is applied to both sides of the water-splitting ion-exchanger 21, ion component in the interface between the positive ion exchanger 22 and the negative ion-exchanger 23 is reduced, resistance becomes high, dissociation of water is caused at some point in time, and hydrogen ion and hydroxide ion are produced.

In the positive ion exchanger 22, calcium ion which is ion-exchanged at the time of the water softening treatment ion-exchanges with the produced hydrogen ion and is regenerated. Calcium ion is discharged into the f low path 24. In the negative ion-exchanger 23, carbonate ion which is ion-exchanged at the time of the water softening treatment ion-exchanges with the produced hydroxide ion and is regenerated. Carbonate ion is discharged into the flow path 24.

The water passage is once switched from the outlet of the second water softening means 6 toward the drain pipe 10 by the second flow passage switching valve 9 which is closed during regeneration, and concentrated water produced in the second water softening means 6 is discharged outside through the drain pipe 10. At that time, oxygen gas and hydrogen gas are generated in the casing 19 of the second water softening means 6 from a surface of the electrode 20 by voltage applied at the time of regeneration.

Since the outlet 19b through which concentrated water flows out is provided in the upper portion in the casing 19, generated gas moves toward the upper portion of in the casing 19, and the gas can be discharged outside through the drain pipe 10 without accumulating in the casing 19. Hence, it is possible to prevent gas from accumulating in the hot water tank 2 of the water heater.

After the concentrated water is discharged, a given amount of water is again introduced from the hot water tank 2 into the second water 6 softening means, the second flow passage switching valve 9 is again closed, and the regenerating treatment of the water-splitting ion-exchangers 21 is performed. Thereafter, the water passage is once switched toward the drain pipe 10 by the second flow passage switching valve 9, and concentrated water after regeneration is discharged out through the drain pipe 10. By repeating such steps, the regenerating treatment of the second water softening means 6 is performed. After the regenerating treatment of the second water softening means 6 is completed, the second flow passage switching valve 9 is at rest in its closed state.

Next, a treatment flow rate of water to be treated by the first water softening means 5 which is performing the water softening treatment exceeds a given accumulated flow rate by measurement of the flowmeter 11, the first flow passage switching valve 8 is closed, the regenerating treatment of the first water softening means is started, and the degenerating treatment is performed in the same manner. The water passage is switched from the outlet of the second water softening means 6 to the water pipe 4b by the second flow passage switching valve 9, and the water softening treatment is performed by the second water softening means 6.

If the treatment flow rate of the second water softening means 6 exceeds a given amount, the second water softening means 6 is regenerated, and the first water softening means 5 performs the water softening treatment instead of the second water softening means 6. Here, the accumulated flow rate which is set by the flowmeter 11 is set based on the ion-exchanging capacity of the water-splitting ion-exchangers 21, and it is possible to always supply soft water of appropriate hardness.

The series of operation of the water softening treatment and the series of regenerating treatment are performed by the control means 30.

The first water softening means 5 and the second water softening means 6 alternately perform the water softening treatment of raw water. Therefore, even if a water-splitting ion-exchange has a small ion-exchanging capacity, it is possible to continuously perform the water softening treatment of a large quantity of, e.g., a few hundred liters of water which is required for boiling.

Although the first water softening means 5 and the second water softening means 6 are used in the embodiment, a first water softening means group having a plurality of first water softening means 5 and a second water softening means group having a plurality of second water softening means 6 may be used. In this case, it is preferable that the number of the first water softening means group and the number of the second water softening means group are the same. When the water softening treatment is performed, the same number of water softening means groups always performs the water softening treatment. According to this, a flow rate of water to be treated is constant and stable, it is possible to treat water into soft water having stable hardness, and the boiling temperature of the water heat exchanger 15 can be maintained at a constant temperature.

As described above, according to the embodiment, the flowmeter 11 and at least two first water softening means 5 and the second water softening means 6 are provided in the water pipe 4, each of the first water softening means 5 and the second water softening means 6 has the casing 19, and at least the pair of electrodes 20, the water-splitting ion-exchangers 21 having the positive ion exchanger 22 and the negative ion-exchanger 23, and the flow path 24 which is in contact with the surface of the water-splitting ion-exchangers 21 are incorporated in the casing 19. When the water softening treatment is perform, the same number of water softening means groups always alternately performs the water softening treatment for raw water. According to this, if the treatment flow rate of water that can be subjected to the water softening treatment by one of the water softening means groups reaches a limit, the other water softening means group performs the water softening treatment, and the water softening means alternately performs the water softening treatment in accordance with the ion-exchanging capacity of the water-splitting ion-exchangers 21. Therefore, a large quantity of water can continuously be subjected to the water softening treatment even if the water-splitting ion-exchangers 21 has a small ion-exchanging capacity.

When the water softening treatment is performed, the same number of water softening means groups always performs the water softening treatment. Therefore, the flow rate of water to be treated is constant and stable, water can be treated into soft water having stable hardness, and hot water can be supplied to a user with a constant and stable flow rate. The boiling temperature at the water heat exchanger 15 can also be maintained at a constant temperature.

Since the water softening treatment and the regenerating treatment can be performed in one apparatus, the apparatus is simple and a space can be saved.

In the control means 30 of the embodiment, the water softening treatment of the first water softening means 5 and the second water softening means 6 is switched, the first flow passage switching valve 8 is switched, and the second flow passage switching valve 9 is switched by a signal from the flowmeter 11. Alternatively, a timer may be provided instead of the flowmeter 11, treatment time during which one of the water softening means can treat water may be set from a flow rate and an ion-exchanging capacity of the water-splitting ion-exchangers 21, and when the water softening means performs the water softening treatment during the set treatment time, the first and second water softening means 5, 6 may be switched. According to this also, the same effect can be obtained.

Alternatively, conductivity meters may be provided downstream of the first water softening means 5 and downstream of the second water softening means 6 instead of the flowmeter 11, and when conductivity of softened water becomes equal to or higher than a given value by a signal from the conductivity meters, the water softening treatment of the first water softening means 5 and the second water softening means 6 may be switched, the first flow passage switching valve 8 may be switched and the second flow passage switching valve 9 may be switched. According to this also, the first water softening means 5 and the second water softening means 6 can be switched in accordance with conductivity which has high interrelationship with hardness, and the water softening treatment can be performed. Therefore, it is possible to supply soft water having further stable hardness.

### [Industrial Applicability]

As described above, the water heater of the invention is compact and has a simple configuration, and it is possible to continuously treat a large quantity of water into soft water having stable hardness with a constant flow rate. Therefore, the water heater can be applied to a washing machine and a water-purification sytem.

## Claims

1. A water treatment device comprising first water softening means (5) and second water softening means (6),
each of the first water softening means (5) and the second water softening means (6) includes a casing (19),
a pair of electrodes (20), a pair of water-splitting ion-exchangers (21) having a positive ion exchanger (22) and a negative ion-exchanger (23), and a flow path (24) which is in contact with a surface of each water-splitting ion-exchanger (21) are provided in the casing (19),
the water-splitting ion-exchangers (21) are provided between the electrodes (20) such that the water-splitting ion-exchangers (21) sandwich the flow path (24),
each of the water-splitting ion-exchangers (21) is of a two layer configuration in which a positive ion exchanger (22) having a strong acid ion-exchange group and a negative ion exchanger (23) having a strong basic ion-exchange group are pasted on each other,
the water treatment device further comprises control means (30),
the control means (30) is configured to carry out a control such that,
after the first water softening means (5) is made to perform a water softening treatment of a predetermined flow rate, the water softening treatment of the first water softening means (5) is stopped,
the second water softening means (6) is made to perform the water softening treatment, and after the second water softening means (6) is made to perform the water softening treatment of a predetermined flow rate, the water softening treatment of the second water softening means (6) is stopped,
the first water softening means (5) is again made to perform the water softening treatment, and
this processing is repeated, thereby making the first water softening means (5) and the second water softening means (6) alternately perform the water softening treatment, **characterized in that**
the positive ion exchanger (22) configuring one of the water-splitting ion-exchangers (21) and the negative ion exchanger (23) configuring the other water-splitting ion-exchanger (21) are opposed to each other such that they sandwich the flow path (24).

2. The water treatment device according to claim 1, further comprising a first water softening means group including the first water softening means (5) and at least one more first water softening means, and a second water softening means group including the second water softening means (6) and at least one more second water softening means, **characterized in that**
while the first water softening means group performs the water softening treatment, the control means (30) is configured to make the second water softening means group perform a regenerating treatment, and
while the second water softening means group performs the water softening treatment, the control means (30) is configured to make the first water softening means group perform the regenerating treatment.

3. The water treatment device according to claim 2, **characterized in that** the first water softening means group and the second water softening means group are disposed in parallel, a first flow passage switching valve (8) is provided downstream of the first water softening means group, a second flow passage switching valve (9) is provided downstream of the second water softening means group, and
the control means (30) is configured to switch the first flow passage switching valve (8), and to switch the second flow passage switching valve (9), thereby making the first water softening means group perform the water softening treatment and making the second water softening means group perform the water softening treatment.

4. The water treatment device according to claim 3, **characterized in that** the first flow passage switching valve (8) and the second flow passage switching valve (9) are three-way valves,
one of outflow ports of each of the three-way valves is provided with a water pipe (4), and the other flow port of the three-way valve is provided with a drain pipe (10).

5. The water treatment device according to claim 3, **characterized in that** a path of a water pipe (4) is provided with a flowmeter (11), and
the control means (30) is configured to switch the first flow passage switching valve (8) and to switch the second flow passage switching valve (9) by a signal from the flowmeter (11).

6. The water treatment device according to claim 3, further comprising a timer, **characterized in that**
the control means (30) is configured to switch the first flow passage switching valve (8) and to switch the second flow passage switching valve (9) by a signal from the timer.

7. The water treatment device according to claim 3, **characterized in that** conductivity meters are disposed downstream of the first water softening means group and downstream of the second water softening means group, respectively, and
the control means (30) is configured to switch the first flow passage switching valve (8) and to switch the second flow passage switching valve (9 by signals from the respective conductivity meters.

8. The water treatment device according to claim 1, **characterized in that** in each of the first water softening means (5) and the second water softening means (6), an upper portion of the casing (19) is provided with an outlet (19b) through which softened water and concentrated water produced by the regenerating treatment flow out.

9. A water heater provided with the water treatment device according to any one of claims 1 to 8.

## Patentansprüche

1. Wasserbehandlungsvorrichtung umfassend erste Wasserenthärtungsmittel (5) und zweite Wasserenthärtungsmittel (6),
wobei jedes der ersten Wasserenthärtungsmittel (5) und der zweiten Wasserenthärtungsmittel (6) ein Gehäuse (19) umfasst,
ein Paar von Elektroden (20), ein Paar von wasserspaltenden Ionenaustauschern (21) mit einem positiven Ionenaustauscher (22) und einem negativen Ionenaustauscher (23) und einen Strömungsweg (24), der mit einer Oberfläche eines jeden wasserspaltenden Ionenaustauschers (21) in Kontakt ist, sind in dem Gehäuse (19) vorgesehen,
die wasserspaltenden Ionenaustauscher (21) sind zwischen den Elektroden (20) bereitgestellt, so dass die wasserspaltenden Ionenaustauscher (21) den Strömungsweg (24) einschließen,
jeder der wasserspaltenden Ionenaustauscher (21) einen zweischichtigen Aufbau aufweist, in dem ein positiver Ionenaustauscher (22) mit einer stark sauren Ionenaustauschgruppe und ein negativer Ionenaustauscher (23) mit einer stark basischen Ionenaustauschgruppe aneinander geklebt sind,
die Wasserbehandlungsvorrichtung weiterhin Steuermittel (30) umfasst,
wobei die Steuermittel (30) derart konfiguriert sind, eine Steuerung auszuführen, so dass, nachdem die ersten Wasserenthärtungsmittel (5) veranlasst wurden, eine Wasserenthärtungsbehandlung bei einer vorbestimmten Strömungsrate durchzuführen, die Wasserenthärtungsbehandlung der ersten Wasserenthärtungsmittel (5) gestoppt wird,
die zweiten Wasserenthärtungsmittel (6) veranlasst werden, die Wasserenthärtungsbehandlung durchzuführen, und nachdem die zweiten Wasserenthärtungsmittel (6) veranlasst wurden, die Wasserenthärtungsbehandlung bei einer vorbestimmten Strömungsrate durchzuführen, die Wasserenthärtungsbehandlung der zweiten Wasserenthärtungsmittel (6) gestoppt wird,
die ersten Wasserenthärtungsmittel (5) werden erneut veranlasst, die Wasserenthärtungsbehandlung durchzuführen, und
diese Verarbeitung wird wiederholt, wodurch die ersten Wasserenthärtungsmittel (5) und die zweiten Wasserenthärtungsmittel (6) veranlasst werden, die Wasserenthärtungsbehandlung abwechselnd durchzuführen,
**dadurch gekennzeichnet, dass**
der positive Ionenaustauscher (22), welcher einen der wasserspaltenden Ionenaustauscher (21) bildet, und der negative Ionenaustauscher (23) welcher den anderen wasserspaltenden Ionenaustauscher (21) bildet, sich gegenüberliegen, so dass sie den Strömungsweg (24) einschließen.

2. Wasserbehandlungsvorrichtung nach Anspruch 1, die ferner eine erste Wasserenthärtungsmittelgruppe einschließlich der ersten Wasserenthärtungsmittel (5) und mindestens eines weiteren ersten Wasserenthärtungsmittels, und eine zweite Wasserenthärtungsmittelgruppe einschließlich der zweiten Wasserenthärtungsmittel (6) und mindestens eines weiteren zweiten Wasserenthärtungsmittels umfasst,
**dadurch gekennzeichnet, dass**,
während die erste Wasserenthärtungsmittelgruppe die Wasserenthärtungsbehandlung durchführt, die Steuermittel (30) konfiguriert sind, die zweite Wasserenthärtungsmittelgruppe zu veranlassen, eine Regenerierungsbehandlung durchzuführen, und,
während die zweite Wasserenthärtungsmittelgruppe die Wasserenthärtungsbehandlung durchführt, die Steuermittel (30) konfiguriert sind, die erste Wasserenthärtungsmittelgruppe zu veranlassen, die Regenerierungsbehandlung durchzuführen.

3. Wasserbehandlungsvorrichtung nach Anspruch 2, **dadurch gekennzeichnet, dass** die erste Wasserenthärtungsmittelgruppe und die zweite Wasserenthärtungsmittelgruppe parallel angeordnet sind, ein erstes Strömungskanal-Schaltventil (8) stromabwärts von der ersten Wasserenthärtungsmittelgruppe vorgesehen ist, ein zweites Strömungskanal-Schaltventil (9) stromabwärts von der zweiten Wasserenthärtungsmittelgruppe vorgesehen ist, und
die Steuermittel (30) konfiguriert sind, das erste Strömungskanal-Schaltventil (8) und das zweite Strömungskanal-Schaltventil (9) zu schalten, wodurch die erste Wasserenthärtungsmittelgruppe veranlasst wird, die Wasserenthärtungsbehandlung durchzuführen und die zweite Wasserenthärtungsmittelgruppe veranlasst wird, die Wasserenthärtungsbehandlung durchführen.

4. Wasserbehandlungsvorrichtung nach Anspruch 3, **dadurch gekennzeichnet, dass** das erste Strömungskanal-Schaltventil (8) und das zweite Strömungskanal-Schaltventil (9) Dreiwegeventile sind, eine der Ausströmöffnungen jedes der Dreiwegeventile mit einem Wasserrohr (4) versehen ist, und die andere Strömungsöffnung des Dreiwegeventils mit einem Ablaufrohr (10) versehen ist.

5. Wasserbehandlungsvorrichtung nach Anspruch 3, **dadurch gekennzeichnet, dass** ein Weg eines Wasserrohrs (4) mit einem Strömungsmesser (11) versehen ist, und
die Steuermittel (30) konfiguriert sind, das erste Strömungskanal-Schaltventil (8) und das zweite Strömungskanal-Schaltventil (9) durch ein Signal von dem Strömungsmesser (11) zu schalten.

6. Wasserbehandlungsvorrichtung nach Anspruch 3, die ferner einen Zeitgeber umfasst, **dadurch gekennzeichnet, dass**
die Steuermittel (30) konfiguriert sind, das erste Strömungskanal-Schaltventil (8) und das zweite Strömungskanal-Schaltventil (9) durch ein Signal von dem Zeitgeber zu schalten.

7. Wasserbehandlungsvorrichtung nach Anspruch 3, **dadurch gekennzeichnet, dass** Leitfähigkeitsmesser stromabwärts von der ersten Wasserenthärtungsmittelgruppe bzw. stromabwärts von der zweiten Wasserenthärtungsmittelgruppe angeordnet sind, und
die Steuermittel (30) konfiguriert sind, das erste Strömungskanal-Schaltventil (8) und das zweite Strömungskanal-Schaltventil (9) durch Signale von dem jeweiligen Leitfähigkeitsmesser zu schalten.

8. Wasserbehandlungsvorrichtung nach Anspruch 1, **dadurch gekennzeichnet, dass** in jedem der ersten Wasserenthärtungsmittel (5) und der zweiten Wasserenthärtungsmittel (6) ein oberer Abschnitt des Gehäuses (19) mit einem Auslass (19b) versehen ist, durch den enthärtetes Wasser und konzentriertes Wasser, das durch die Regenerationsbehandlung produziert wurde, ausfließt.

9. Wassererhitzer, der mit der Wasserbehandlungsvorrichtung gemäß einem der Ansprüche 1 bis 8 versehen ist.

## Revendications

1. Dispositif de traitement de l'eau comprenant des premiers moyens d'adoucissement de l'eau (5) et des deuxièmes moyens d'adoucissement de l'eau (6),
dans lequel chacun des premiers moyens d'adoucissement de l'eau (5) et des deuxièmes moyens d'adoucissement de l'eau (6) comprend un boîtier (19),
une paire d'électrodes (20), une paire d'échangeurs d'ions (21) dissociant l'eau comprenant un échangeur d'ions positifs (22) et un échangeur d'ions négatifs (23), et un trajet d'écoulement (24) qui est en contact avec une surface de chaque échangeur d'ions (21) dissociant l'eau sont prévus dans ledit boîtier (19),
les échangeurs d'ions (21) dissociant l'eau sont prévus entre les électrodes (20) de sorte que les échangeurs d'ions (21) dissociant l'eau prennent en sandwich le trajet d'écoulement (24),
chacun des échangeurs d'ions (21) dissociant l'eau est d'une configuration à deux couches dans laquelle un échangeur d'ions positifs (22) ayant un groupe échangeur d'ions fortement acide et un échangeur d'ions négatifs (23) ayant un groupe échangeur d'ions fortement basique sont collés l'un contre l'autre,
ledit dispositif de traitement de l'eau comprend en outre des moyens de commande (30),
les moyens de commande (30) étant configurés pour effectuer une commande de sorte que, après que les premiers moyens d'adoucissement de l'eau (5) ont été amenés à effectuer un traitement d'adoucissement de l'eau à un débit prédéterminé, le traitement d'adoucissement de l'eau des premiers moyens d'adoucissement de l'eau (5) est arrêté,
les deuxièmes moyens d'adoucissement de l'eau (6) sont amenés à effectuer le traitement d'adoucissement de l'eau, et, après que les deuxièmes moyens d'adoucissement de l'eau (6) ont été amenés à effectuer le traitement d'adoucissement de l'eau à un débit prédéterminé, le traitement d'adoucissement de l'eau des deuxièmes moyens d'adoucissement de l'eau (6) est arrêté,
les premiers moyens d'adoucissement de l'eau (5) sont amenés à nouveau à effectuer le traitement d'adoucissement de l'eau, et
ce traitement est répété, ce par quoi les premiers moyens d'adoucissement de l'eau (5) et les deuxièmes moyens d'adoucissement de l'eau (6) sont amenés à effectuer alternativement le traitement d'adoucissement de l'eau,
**caractérisé par le fait que**
l'échangeur d'ions positifs (22) configurant l'un des échangeurs d'ions (21) dissociant l'eau et l'échangeur d'ions négatifs (23) configurant l'autre échangeur d'ions (21) dissociant l'eau se font face l'un à l'autre de manière à prendre en sandwich le trajet d'écoulement (24).

2. Dispositif de traitement de l'eau selon la revendication 1, comprenant en outre un premier groupe de moyens d'adoucissement de l'eau comprenant les premiers moyens d'adoucissement de l'eau (5) et au moins un autre premier moyen d'adoucissement de l'eau, ainsi qu'un deuxième groupe de moyens d'adoucissement de l'eau comprenant les deuxièmes moyens d'adoucissement de l'eau (6) et au moins un autre deuxième moyen d'adoucissement de l'eau,
**caractérisé par le fait que**,
tandis que le premier groupe de moyens d'adoucissement de l'eau effectue le traitement d'adoucissement de l'eau, les moyens de commande (30) sont configurés pour amener le deuxième groupe de moyens d'adoucissement de l'eau à effectuer un traitement de régénération, et,
tandis que le deuxième groupe de moyens d'adoucissement de l'eau effectue le traitement d'adoucissement de l'eau, les moyens de commande (30) sont configurés pour amener le premier groupe de moyens d'adoucissement de l'eau à effectuer le traitement de régénération.

3. Dispositif de traitement de l'eau selon la revendication 2, **caractérisé par le fait que** le premier groupe de moyens d'adoucissement de l'eau et le deuxième groupe de moyens d'adoucissement de l'eau sont disposés en parallèle, une première vanne de commutation de passage d'écoulement (8) est prévue en aval du premier groupe de moyens d'adoucissement de l'eau, une deuxième vanne de commutation de passage d'écoulement (9) est prévue en aval du deuxième groupe de moyens d'adoucissement de l'eau, et
les moyens de commande (30) sont configurés pour commuter la première vanne de commutation de passage d'écoulement (8) et pour commuter la deuxième vanne de commutation de passage d'écoulement (9), ce par quoi le premier groupe de moyens d'adoucissement de l'eau est amené à effectuer le traitement d'adoucissement de l'eau et le deuxième groupe de moyens d'adoucissement de l'eau est amené à effectuer le traitement d'adoucissement de l'eau.

4. Dispositif de traitement de l'eau selon la revendication 3, **caractérisé par le fait que** la première vanne de commutation de passage d'écoulement (8) et la deuxième vanne de commutation de passage d'écoulement (9) sont des vannes à trois voies, l'un des orifices d'échappement de chacune des vannes à trois voies étant pourvu d'un tuyau d'eau (4) et l'autre orifice d'écoulement de la vanne à trois voies étant pourvu d'un tuyau d'évacuation (10).

5. Dispositif de traitement de l'eau selon la revendication 3, **caractérisé par le fait qu'**un chemin d'un tuyau d'eau (4) est pourvu d'un débitmètre (11), et
les moyens de commande (30) sont configurés pour commuter la première vanne de commutation de passage d'écoulement (8) et pour commuter la deuxième vanne de commutation de passage d'écoulement (9) par un signal en provenance dudit débitmètre (11).

6. Dispositif de traitement de l'eau selon la revendication 3, comprenant en outre une minuterie, **caractérisé par le fait que**
les moyens de commande (30) sont configurés pour commuter la première vanne de commutation de passage d'écoulement (8) et pour commuter la deuxième vanne de commutation de passage d'écoulement (9) par un signal en provenance de ladite minuterie.

7. Dispositif de traitement de l'eau selon la revendication 3, **caractérisé par le fait que** des conductimètres sont disposés en aval du premier groupe de moyens d'adoucissement de l'eau et en aval du deuxième groupe de moyens d'adoucissement de l'eau, respectivement, et
les moyens de commande (30) sont configurés pour commuter la première vanne de commutation de passage d'écoulement (8) et pour commuter la deuxième vanne de commutation de passage d'écoulement (9) par des signaux en provenance du conductimètre respectif.

8. Dispositif de traitement de l'eau selon la revendication 1, **caractérisé par le fait que**, dans chacun des premiers moyens d'adoucissement de l'eau (5) et des deuxièmes moyens d'adoucissement de l'eau (6), une portion supérieure du boîtier (19) est munie d'une sortie (19b) à travers laquelle s'écoule de l'eau adoucie et de l'eau concentrée produite par le traitement de régénération.

9. Chauffe-eau pourvu du dispositif de traitement de l'eau selon l'une quelconque des revendications 1 à 8.
